# EUROPÄISCHE PATENTSCHRIFT

(11) **EP 0 345 456 B1**
(45) Veröffentlichungstag und Bekanntmachung des Hinweises auf die Patenterteilung: **25.08.1993**
(21) Anmeldenummer: 89107756.2
(22) Anmeldetag: 28.04.1989
(51) Int. Cl.: F16J 15/52, F16K 41/10

(54) **Leckagefreie Drehvorrichtung zur Übertragung einer Drehbewegung durch eine Gehäusewand**
Device for the leak-tight transmission of rotary motion through a wall
Dispositif de transmission d'un mouvement rotatif à travers une cloison, avec une étanchéité totale

(30) Priorität: 01.06.1988 DE 3818742
(43) Veröffentlichungstag der Anmeldung: 13.12.1989
(73) Patentinhaber: ZEO-TECH Zeolith Technologie GmbH, D-85716 Unterschleissheim (DE)
(72) Erfinder: Maier-Laxhuber, Dr. Peter, D-8000 München 60 (DE); Kaubeck, Dipl. Ing. Fritz, D-8035 Gauting (DE)

(56) Entgegenhaltungen:
- DE-A- 2 336 009
- FR-A- 2 369 486
- FR-A- 2 621 675

## Beschreibung

Die Erfindung betrifft eine leckagefreie Drehvorrichtung zur Übertragung einer Drehbewegung auf eine Dreheinheit innerhalb eines Gehäuses gemäß dem Oberbegriff des Anspruches 1.

Bei Drehvorrichtungen zur Übertragung einer Drehbewegung durch eine Gehäuse- oder Behälterwand treten häufig Undichtigkeiten auf, da die gewöhnlich verwandten Dichtungsmaterialien bei extremer Beanspruchung durch die Reibung zwischen Drehwelle und Gehäuse undicht werden. Bei Gehäusen, in denen sich chemische, toxische, ätzende oder radioaktive Stoffe befinden, kann häufig eine solche Drehvorrichtung nicht eingesetzt werden. In diesen Fällen muß entweder auf eine magnetische Kopplung oder auf die Umsetzung einer Längsbewegung mit Hilfe einer Exzenterwelle in eine Drehbewegung zurückgegriffen werden. Axiale Längsbewegungen wie sie beispielsweise bei balggedichteten Ventilen, insbesondere bei Vakuumventilen vorkommen, gehören zum Stand der Technik. Allein mit axialen Längsbewegungen lassen sich jedoch viele Probleme nur unbefriedigend lösen. So sind beispielsweise balg- oder membrangedichtete Ventile nicht besonders schnell wirkend und durch die notwendige Umlenkung der Medienströme nur mit einer geringen Leitfähigkeit verfügbar. Vakuumdichte Ventile sind darüber hinaus durch einen komplizierten und extrem raumgreifenden Aufbau gekennzeichnet.
Der Einsatz magnetgekoppelter Drehvorrichtungen scheitert dort, wo höhere Drehmomente zu übertragen sind bzw. dort wo höhere Temperaturen den Magneten zerstören.

Aus der DE-A-2336009 ist ein durch einen Balg gedichtetes Drosselventil bekannt, in dessem Gehäuse eine Ventilscheibe angeordnet ist, die mit ihrem äußeren Umfang den Strömungsdurchlaß verschließen kann wenn die Ventilscheibe quer zur Achse des Durchlasses verdreht wird. Die Drehung der Ventilscheibe erfolgt dabei über eine drehbare Arbeitsspindel, die sich durch das Gehäuse nach außen erstreckt und von einem metallischen Balg umschlossen wird. Mit Hilfe eines äußeren drehbaren Gehäuseteils kann eine radiale Kraft auf das äußere Ende der Balgeinheit ausgeübt werden, so daß die Ventilscheibe im Innern des Gehäuses um etwa 90° verstellt werden kann. Die Ventilscheibe und die Arbeitsspindel müssen dabei im Gehäuse frei schwebend angeordnet sein, damit eine axiale Bewegung der Spindel ermöglicht wird. Der äußere drehbare Gehäuseteil ist mit einer Führung für die Betätigungsspindel ausgeführt, welche eine Neigung zur Drehachse von etwa 10-20° aufweist. Dieser drehbare Gehäuseteil ist technisch sehr aufwendig und in der Fertigung äußerst kompliziert, da er zwei Drehachsen (erste Drehachse parallel zur Drehachse der Ventilscheibe, zweite Drehachse parallel zur Neigung der Arbeitsspindel) kombinieren muß, um eine Führung der äußeren Enden der Arbeitsspindel zu gewährleisten und um zu verhindern, daß der Balg bei innerem Überdruck gereckt und zerstört wird.

Die FR-A-2621675 zeigt eine leckagefreie Drehvorrichtung der gattungsgemäßen Art, wobei ein Recken und Zerstören des Balges dadurch verhindert wird, daß die flexible Hülle samt Arbeitsspindel außen von einem Rohrbogen schützend umhüllt ist. Der Rohrbogen ist mit seinem einen Ende drehbar am Gehäuse fixiert, wahrend das andere Ende die flexible Hülle so umgreift, daß diese auch bei Überdruck nicht von der Arbeitsspindel abheben kann.

Aufgabe der Erfindung ist eine leckagefreie Drehvorrichtung zur Übertragung einer Drehbewegung in ein Gehäuse, die sich durch einen einfachen Aufbau und eine kostengünstige Fertigung auszeichnet. Gelöst wird diese Aufgabe bei einer leckagefreien Drehvorrichtung gemäß dem kennzeichnenden Teil des Anspruchs 1.

Die Unteransprüche zeigen vorteilhafte Ausgestaltungen der Drehvorrichtung sowie vorteilhafte Verwendungsmöglichkeiten auf.

Ein wichtiges Merkmal der vorliegenden Erfindung ist die Ausgestaltung der Hebelvorrichtung in Verbindung mit der diese umgebenden flexiblen Hülle. Das eine Ende der Hebelvorrichtung ist innerhalb des Gehäuses mit der zu drehenden Dreheinheit kraftschlüssig verbunden. Durch die Einwirkung einer äußeren Kraft wird dieses Ende der Hebelvorrichtung im wesentlichen um die Drehachse der Dreheinheit verdreht. Die umgebende flexible Hülle folgt den Bewegungen der Hebelvorrichtung und vollführt gegenüber dieser eine Drehbewegung. Bei einer Vollumdrehung der Hebelvorrichtung bewegt sich ein markierter Punkt auf der flexiblen Hülle einmal um die Hebelvorrichtung. Die flexible Hülle ist dabei mit ihrem einen Ende fest mit dem Gehäuseteil verbunden, während ihr freies Ende das freie Ende der Hebelvorrichtung umgibt und dessen Kreisbahn folgt.

Besonders einfach wird der Aufbau der Drehvorrichtung dadurch, daß für das freie Ende der Hebelvorrichtung kein zusätzliches Bauteil erforderlich ist, um die Hülle zusammen mit der Hebelvorrichtung entlang der Kreisbahn zu führen. Erfindungsgemäß wird dies dadurch erreicht, daß das eine Ende der Hebelvorrichtung innerhalb des Gehäuses so geführt wird, daß es dort nur eine Drehbewegung um die Drehachse der Dreheinheit ausführen kann. Kurze Bewegungen in axialer Richtung sind zwar nicht ausgeschlossen, sollten jedoch auf ein unbedingt notwendiges Maß reduziert werden, um der flexiblen Hülle keine zusätzliche Verformungen aufzuzwingen.

Die Neigung des freien Endes der Hebelvorrichtung gegenüber der Drehachse der Dreheinheit ist beliebig. Vorteilhaft ist es beispielsweise, den Neigungswinkel auf 90° festzulegen. In diesem Fall ist eine manuelle Betätigung der Hebelvorrichtung besonders einfach. Selbstverständlich ist der Neigungswinkel nicht auf Werte bis 90° beschränkt. Bei geeigneter Wahl des Hüllenmaterials sind auch Neigungswinkel bis 180° möglich.

Da sich die flexible Hülle gegenüber der Hebelvorrichtung dreht, ist es vorteilhaft, beide Bauteile so zu gestalten, daß während der Drehbewegung möglichst wenig Reibungskräfte auftreten. Es ist deshalb von Vorteil, die Form der Hebelvorrichtung der natürlichen Formveränderung der Hülle anzupassen.

In einfachen Ausführungsformen wird die flexible Hülle das freie Ende der Hebelvorrichtung als Gesamtheit umhüllen. Von Vorteil ist es aber auch, wenn das freie Ende der Hülle durch einen unflexiblen Schaft ersetzt ist, der selbstverständlich ebenfalls gegenüber dem freien Hebelende drehbar geführt sein muß. In diesem Fall ist es anzustreben, Verstellkräfte in erster Linie auf diesen unflexiblen Schaft einwirken zu lassen.

Bei Anwendungen, in denen innerhalb des Gehäuses kein bzw. kein nennenswerter Überdruck auftritt, ist es nicht notwendig, das freie Ende der Hülle auf dem freien Ende der Hebelvorrichtung drehbar zu führen. Tritt jedoch innerhalb des Gehäuses ein nennenswerter Überdruck auf, so ist zum Schutz der flexiblen Hülle diese erfindungsgemäß am Ende der Hebelvorrichtung drehbar zu lagern. Hier eignen sich alle bekannten Mittel, die verhindern, daß die Hülle vom freien Ende der Hebelvorrichtung abgehoben werden kann.

Eine einfache aber wirkungsvolle Drehhalterung wird beispielsweise dadurch erreicht, daß das freie Ende der Hebelvorrichtung eine Gewindebohrung aufweist, in welche eine Schraube eingedreht ist, die mit dem Ende der flexiblen Hülle stoffschlüssig verbunden ist. Die Schraube ist in der Gewindebohrung drehbar, so daß in Anwendungsfällen, in denen die Drehvorrichtung nur wenige Umdrehungen ausführen muß, ein ausreichender Halt für die Hülle gewährleistet wird.

Da die flexible Hülle im allgemeinen gegen den Einfluß großer Torsionskräfte bzw. die Einwirkung spitzer und scharfer Gegenstände geschützt werden muß, ist es vorteilhaft, diese mit einer weiteren Griffhülle zu umgeben. Dabei ist darauf zu achten, daß diese Griffhülle keine großen zusätzlichen Reibungskräfte gegen die Bewegung der flexiblen Hülle erzeugt und gegenüber der Hülle drehbar gelagert ist. Von Vorteil kann es weiterhin sein, wenn diese Griffhülle an ihrem einen freien Ende am Gehäuse geführt ist, so daß dieses Ende die Drehung der Dreheinheit nachvollziehen kann. Das zweite Ende dieser Griffhülle kann weiterhin dazu vorgesehen sein, die Aufgaben der Drehalterung zu erfüllen.

Als flexible Hülle eignen sich insbesondere alle Materialien, mit welchen eine Angularbewegung ausgeführt werden kann. Hierzu zählen in erster Linie Gummi- und Kunststofftüllen, sowie metallische Schläuche oder Bälge. Sogenannte ganzmetallische Wellschläuche sind beispielsweise aus dem Taschenbuch Nr. 301, Ausgabe 1984, der Fa. Witzenmann GmbH in Pforzheim, bekannt. Vorteile und Eigenschaften von sog. Metallbälgen sind aus dem Taschenbuch Nr. 441, Ausgabe 1985 o.g. Firma zu entnehmen. Sowohl Metallbälge als auch -schläuche zeichnen sich durch eine große Druckfestigkeit, hohe Vakuumdichtigkeit, große Temperatur- und Korrosionsbeständigkeit, extreme Elastizität und hohe Wirtschaftlichkeit aus.

Metallbälge und -schläuche sind innerhalb ihrer Festigkeits- bzw. Stabilitätsgrenzen in der Lage, neben den notwendigen Angularbewegung auch Torsionsdrehmomente aufzunehmen und zu übertragen. Gerade bei der erfindungsgemäßen Verwendung metallischer Hüllen tritt neben der Angularbeanspruchung ein Torsionsdrehmoment auf, das durch die Reibung der Hülle mit der Hebelvorrichtung bzw. durch die Einwirkung äußerer Drehkräfte entsteht. Gegen diese Torsionsbelastung sind jedoch insbesondere Metallbälge besonders resistent. Des weiteren kann es von Vorteil sein, sog. mehrlagige Bälge bzw. Schläuche einzusetzen, die trotz höherer Druckbelastbarkeit keine Beschränkung bei der notwendigen Angularbewegung ergeben. Metallische Hüllen lassen sich des weiteren durch Schweiß- bzw. Lötverfahren mit dem Gehäusematerial problemlos leckagedicht verbinden.

Die Hebelvorrichtung selbst kann ebenfalls aus Metall bestehen. Vorteilhaft sind runde Querschnittsformen, da diese insbesondere in einer schlauch- oder balgförmigen Hülle wenig Reibungswiderstand bieten. Beim Einsatz der Drehvorrichtung in Vakuumsystemen ist es notwendig, zur Vermeidung von virtuellen Lecks den Gasraum zwischen flexibler Hülle und Hebelvorrichtung mit dem Gehäuseinnenraum strömungsmäßig zu verbinden. Für diese Fälle kann es vorteilhaft sein, die Hebelvorrichtung aus einem Hohlrohr zu formen, wobei gleichzeitig die Biegung der Hebelvorrichtung der natürlichen Angularform einer metallischen Hülle angepaßt ist.

Neben den bereits oben erwähnten Verwendungsmöglichkeiten der leckagefreien Drehvorrichtung ist deren Einsatz in Absperreinheiten, bei denen eine als Drehkörperfläche ausgebildete Dichtfläche vorhanden ist, in idealer Weise geeignet. Insbesondere Absperreinrichtungen mit Kugel- oder Zylinderdichtflächen (sog. Kugelhähne bzw. Kükenhähne) lassen sich durch die erfindungsgemäße Drehdurchführung zu extrem leckagefreien Ventilen ergänzen. Kugelhähne sind äußerst preiswert herstellbar und bieten den geringsten Strömungswiderstand aller bekannten Absperrvorrichtungen.

Bei Absperrvorrichtungen der o.g. Art genügt in der Regel eine Drehung der Drehvorrichtung um 90°, um die Absperreinrichtung vollständig zu öffnen. Bei allen Anwendungen, bei denen die Drehbewegung auf kleine Winkel beschränkt ist, ist die Hülle geringeren Belastungen ausgesetzt. Um die Drehbewegung der Hebelvorrichtung beispielsweise auf Winkel von 90° zu begrenzen, kann auf die bekannten Lösungen bei Kugelhähnen zurückgegriffen werden.

Besonders einfach wird der Aufbau eines Kugelhahnes, wenn die erfindungsgemäße Dreheinheit die mit einer Bohrung versehene Kugel des Kugelhahnes selbst ist und das eine Ende der Hebelvorrichtung an der Kugel so befestigt ist, daß die Kugel gleichzeitig die Führung für die Hebelvorrichtung darstellt.

Besonders interessante Anwendungsfälle einer leckagefreien Absperreinheit sind beispielsweise aus der DE-A-35 21 484 bekann. Es handelt sich dabei um Sorptionsapparate, bei denen eine Zeolithfüllung Wasserdampf ad- bzw. desorbiert. Der Wasserdampf wird dabei in separaten Apparateteilen verflüssigt und verdampft. Da Wasserdampf bei den angestrebten tiefen Verdampfungstemperaturen eine sehr geringe Dichte hat, müssen die in der Apparatur verwandten Absperreinrichtungen eine hohe Leitfähigkeit aufweisen und aufgrund der niedrigen Wasserdampfdrücke absolut vakuumdicht sein. Bei bestimmten Ausführungsformen solcher Adsorptionsapparate tritt der Fall auf, daß vor dem Absperrorgan eine Wassermenge gestaut wird. Beim Öffnen der Absperrvorrichtung muß dann die gestaute Wassermenge vollständig abfließen, um den Wirkungsgrad der Vorrichtung nicht unnötig zu verschlechtern. Gerade Kugelhähne der oben beschriebenen Ausführungsformen erfüllen diese Aufgabe in optimaler Weise.

Darüber hinaus können Kugelhähne mit erfindungsgemäßer Drehvorrichtung auch besonders wirtschaftlich in Leichtbauweise gefertigt werden. Ihr Einsatz in mobilen Sorptionsapparaten, beispielsweise in Land- und Luftfahrzeugen, ist deshalb besonders vorteilhaft. Sicherheitsrelevante Einsatzgebiete sind beispielsweise Absperrkugelhähne für Gasleitungen. Ein unbemerktes Austreten von Gas durch defekte Stopfbuchsen kann durch den Einsatz der erfindungsgemäßen leckagefreien Kugelhähne verhindert werden.

Weitere vorteilhafte Anwendungen ergeben sich beim Einsatz in Wasserleitungssystemen oder industriellen Prozessen, bei denen die Stopfbuchspackung durch die Einwirkung hoher Temperaturen schnell verschleißt. Ausführungsbeispiele der Erfindung sind in der Zeichnung dargestellt und im folgenden näher erläutert.

Es zeigen:
- Fig. 1: eine gattungsgemäße Drehvorrichtung an einem Gehäuse im Schnitt,
- Fig. 2: die relative Drehbewegung der flexiblen Hülle gegenüber der Hebelvorrichtung bei einer 90°-Drehung,
- Fig. 3: eine erfindungsgemäße Drehvorrichtung an einem Kugelhahn im Schnitt,
- Fig. 4: eine erfindungsgemäße Drehvorrichtung mit Griffhülle im Schnitt und

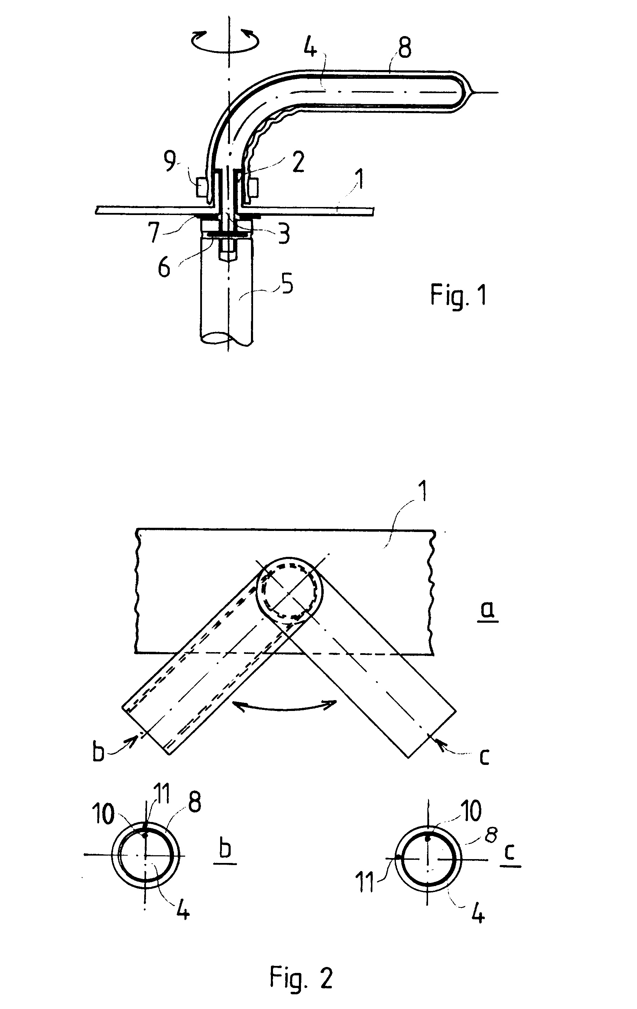

Fig. 1 zeigt einen Teil einer Gehäusewand 1 mit einem Führungsstutzen 2, in dem das eine Ende 3 einer Hebelvorrichtung 4 drehbar geführt ist. Das in das Behälterinnere ragende Ende der Hebelvorrichtung 4 ragt in eine Bohrung einer Dreheinheit 5, welche mit einer weiteren Bohrung versehen ist, die einen Bolzen 6 enthält, der das freie Ende der Hebelvorrichtung 4 in der Dreheinheit 5 fixiert. Zwischen Gehäusewand 1 und der dieser zugewandten Stirnfläche der Dreheinheit 5 befindet sich eine Beilagscheibe 7. Das in den Führungsstutzen 2 ragende Ende 3 der Hebelvorrichtung 4 ist gegenüber der restlichen Hebelvorrichtung verjüngt, so daß sich zwischen Führungsstutzen 2 und Hebelvorrichtung 4 ein Anschlag ausbildet, der in Verbindung mit der innerhalb des Gehäuses angeordneten Dreheinheit 5 eine axiale Bewegung der Hebelvorrichtung 4 ausschließt. Der außerhalb dem Gehäuse und dem Führungsstutzen 2 befindliche Teil der Hebelvorrichtung 4 ist um 90° aus der Drehachse der Dreheinheit 5 geneigt und mit einer flexiblen Hülle 8 umgeben. Diese besteht aus einer Gummitülle, deren offenes Ende über den Führungsstutzen 2 gestülpt und mit einer Schlauchklemme 9 fixiert ist. Der innere Durchmesser der flexiblen Hülle 8 ist dabei so gewählt, daß bei einer Drehung der Hebelvorrichtung 4 zwischen dieser und der Hülle 8 wenig Reibungswiderstände auftreten.

Fig. 2 zeigt eine Drehvorrichtung a mit Blickrichtung parallel zur Drehachse. Gezeigt sind zwei Drehstellungen b und c, die sich um einen Drehwinkel von 90° unterscheiden. Das freie Ende der Hebelvorrichtung 4 ist dabei geschnitten. Die Teilfiguren b und c verdeutlichen die Relativbewegung der flexiblen Hülle 8 gegenüber der Hebelvorrichtung 4 an der Schnittstelle. Während sich ein markierter Punkt 10 auf der Hebelvorrichtung 4 bei einer Drehung der Drehdurchführung nicht bewegt, wandert ein entsprechend markierter Punkt 11 auf der flexiblen Hülle auf einem Kreisbogen um 90°. Beim Weiterdrehen der Hebelvorrichtung würde auch der markierte Punkt 11 weiter auf einer Kreisbahn wandern. Bei einer Vollumdrehung der Hebelvorrichtung 4 hätte der Punkt 11 gegenüber dem markierten Punkt 10 eine volle Kreisbewegung vollzogen. Bedingt durch diese Relativbewegung zwischen flexibler Hülle 8 und Hebelvorrichtung 4 treten Reibungskräfte auf, deren Stärke durch geeignete, konstruktive Maßnahmen gering zu halten sind.

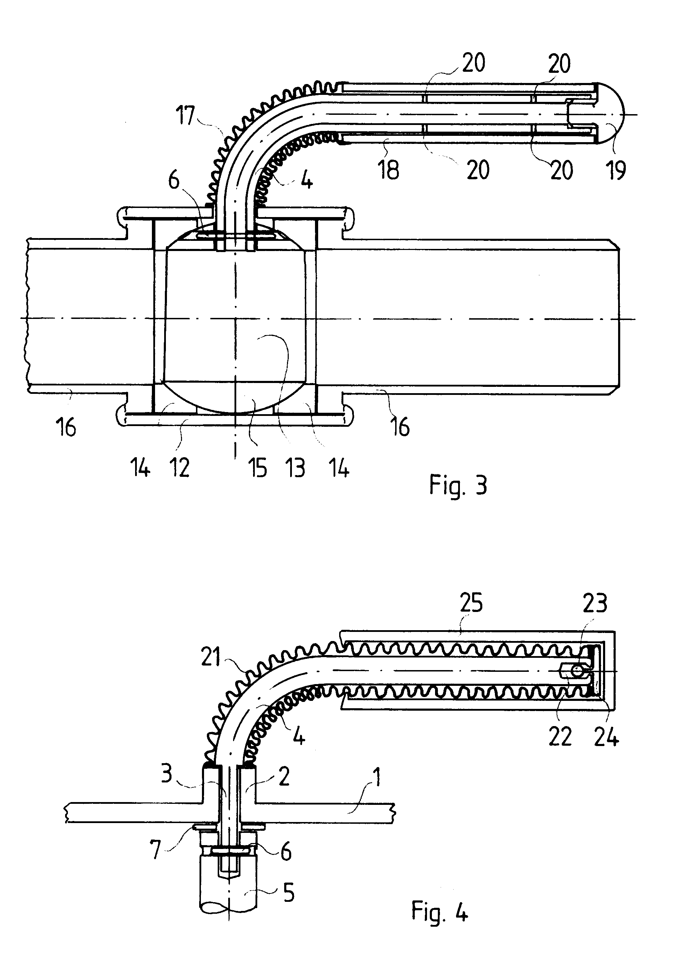

Fig. 3 zeigt einen Kugelhahn mit einer erfindungsgemäßen, leckagefreien Drehvorrichtung im Schnitt. In einem kurzen Rohrstück 12 befindet sich eine mit einer großen Bohrung 13 versehene Kugel 15, die von zwei Dichtungsringen 14 geführt ist. Die Dichtungsringe 14 werden von zwei Rohrstutzen 16, die mit dem Rohrstück 12 verschweißt sind an die Kugel 15 gepreßt. Mit Hilfe weiterer Bohrungen wird das eine Ende der Hebelvorrichtung 4 wiederum durch einen bereits aus der Fig. 1 bekannten Bolzen 6 fixiert. Der gebogene Teil der Hebelvorrichtung 4 wird von einem Metallbalg 17, dessen eines Ende auf dem Rohrstück 12 verlötet ist, umhüllt. Am anderen Ende des Metallbalgs 17 ist ein Betätigungsschaft 18 angeschweißt, der das gerade Ende der Hebelvorrichtung 4 umhüllt. Das andere freie Ende des Betätigungsschaftes 18 ist mit dem Kopf einer Schraube 19 stoffschlüssig verbunden. Das Gewinde der Schraube 19 ist in eine Gewindebohrung am freien Ende der Hebelvorrichtung 4 eingedreht. Gewindebohrung und Schraubengänge greifen dabei soweit ineinander, daß eine erfindungsgemäße Drehung um 90° zwischen Schraube und Hebelvorrichtung problemlos möglich ist. Die Hebelvorrichtung 4 ist aus einem Hohlrohr geformt, damit der Zwischenraum zwischen Metallbalg 17, Betätigungsschaft 18 und der Hebelvorrichtung 4 über die Kugel 15 evakuierbar ist. Die Hebelvorrichtung 4 ist dazu mit Evakuierbohrungen 20 versehen.

Fig. 4 zeigt eine weitere leckagefreie Drehvorrichtung im Schnitt, deren Teile innerhalb der Gehäusewand 1 bereits aus der Fig. 1 bekannt sind. Abweichend von der Fig. 1 besteht die flexible Hülle in diesem Beispiel aus einem Metallschlauch 21, der sich über die gesamte Hebelvorrichtung 4 außerhalb des Gehäuses 1 erstreckt. Am freien Ende der Hebelvorrichtung 4 befindet sich eine Bohrung 22 in welcher ein Kugelkopf 23 einer Drehhalterung 24 gelagert ist. Nach Einbringung des Kugelkopfes 23 ist die Öffnung der Bohrung 22 soweit verformt worden, daß der Kugelkopf 23 drehbar eingeschlossen bleibt. Die Drehhalterung 24 ist mit dem freien Ende des Metallschlauches 21 verschweißt, während das andere Ende des Wellschlauchs 21 mit dem Führungsstutzen 2 des Gehäuses 1 stoffschlüssig verlötet ist. Das nicht gebogene Ende des Metallschlauchs 21 ist mit einer Griffhülle 25 umgeben, die auf dem Metallschlauch 21 drehbar gelagert ist und diesen gegen Betätigungskräfte von außen schützt. In erfindungsgemäßer Weise ist in diesem Ausführungsbeispiel die Griffhülle 25 gegenüber dem Metallschlauch 21 und dieser wiederum gegen die Hebelvorrichtung 4 drehbar. Die Griffhülle 25 ist gegen ein Abgleiten vom Metallschlauch durch ein Eingreifen eines seiner Enden in die Wellen des Metallschlauchs 21 geschützt.

## Patentansprüche

1. Drehvorrichtung mit Leckagefreien Drehdurchführung zur Übertragung einer Drehbewegung auf eine Dreheinheit (5) innerhalb eines Gehäuses (1), mit einer mit der Dreheinheit (5) kraftschlüssig verbundenen Hebelvorrichtung (4), die von einer mindestens teilweise flexiblen als Dichtung dienenden Hülle (8) umgeben ist, wobei das eine Ende (3) der Hebelvorrichtung (4) mit der Dreheinheit (5) verbunden ist, wobei das andere Ende der Hebelvorrichtung (4) aus der Richtung der Drehachse geneigt ist, und wobei die Drehvorrichtung Halterungen aufweist, die bei innerem Überdruck ein Abheben der Hülle (8) von der Hebelvorrichtung (4) verhindern, als auch ein Abheben der Hebelvorrichtung (4) an sich, dadurch gekennzeichnet, daß die das Abheben der Hülle (8) verhindernde Halterung als Drehhalterung (19,24) ausgebildet ist, die einerseits dichtend und der Hülle (8) verbunden ist und andererseits drehbar am freien Ende der Hebelvorrichtung (4) gehaltert ist, und daß die Hebelvorrichtung (4) so gelagert und geführt ist, daß sie sich nicht vom Gehäuse abheben kann.

2. Drehvorrichtung nach Anspruch 1,
dadurch gekennzeichnet,
daß die Drehhalterung (24) aus einer Schraube (19) besteht, die in eine Gewindebohrung am freien Ende der Hebelvorrichtung (4) drehbar eingreift.

3. Drehvorrichtung nach mindestens einem der vorhergehenden Ansprüche,
dadurch gekennzeichnet,
daß an das freie Ende der flexiblen Hülle (8) ein Betätigungsschaft (18) stoffschlüssig angeformt ist, der am freien Ende der Hebelvorrichtung (4) drehbar gelagert ist.

4. Drehvorrichtung nach mindestens einem der vorhergehenden Ansprüche,
dadurch gekennzeichnet,
daß die flexible Hülle (8) einen Metallschlauch (21) oder einen Metallbalg (17) enthält.

5. Drehvorrichtung nach mindestens einem der vorhergehenden Ansprüche,
dadurch gekennzeichnet,
daß die flexible Hülle (8) von einer Griffhülle (25) umgeben ist, die gegen die flexible Hülle (8) drehbar geführt ist, die Betätigungskräfte aufnimmt und gegen äußere Einwirkungen schützt.

6. Drehvorrichtung nach mindestens einem der vorhergehenden Ansprüche,
dadurch gekennzeichnet,
daß der Zwischenraum zwischen der Hebelvorrichtung (4) und der flexiblen Hülle (8) mit dem Innenraum des Gehäuses (1) in Verbindung steht.

7. Drehvorrichtung nach mindestens einem der vorhergehenden Ansprüche,
dadurch gekennzeichnet,
daß die Hebelvorrichtung (4) ein gebogenes Rohrstück enthält, dessen Rohrinnenraum mit dem Innenraum des Gehäuses (1) in Verbindung steht.

8. Drehvorrichtung nach mindestens einem der vorhergehenden Ansprüche,
dadurch gekennzeichnet,
daß das Gehäuse (1) Bestandteil einer Absperreinheit ist, bei der eine als Drehkörperfläche ausgebildete Dichtfläche vorhanden ist, die mittels der Hebelvorrichtung (4) drehbar ist.

9. Drehvorrichtung nach einem der vorhergehenden Ansprüche,
dadurch gekennzeichnet,
daß die Führung der Hebelvorrichtung (4) allein durch die Dreheinheit (5) erfolgt.

10. Drehvorrichtung nach mindestens einem der vorhergehenden Ansprüche
dadurch gekennzeichnet,
daß das gasdichte Gehäuse (1) Bestandteil eines Sorptionsapparates ist, der mit dem Sorptionsmittel Zeolith gefüllt ist.

## Claims

1. A rotary device comprising a leak-free rotary transmission leadthrough for the transmission of a rotary motion to a rotating unit (5) within a housing (1), with a lever device (4) which is frictionally connected to the rotating unit (5) and which is surrounded by an at least partially flexible sleeve (8) serving as a seal, wherein one end (3) of the lever device (4) is connected to the rotating unit (5), wherein the other end of the lever device (4) is inclined out of the direction of the axis of rotation, and wherein the rotary device comprises retention means which, in the event of internal excess pressure, prevent the sleeve (8) from lifting up from the lever device (4) and also prevent the lifting up of the lever device (4) itself, characterised in that the retention means which prevent the lifting up of the sleeve (8) comprise a rotary retention device (19, 24) which on the one hand is connected in sealing fashion to the sleeve (8) and on the other hand is rotatably fixed to the free end of the lever device (4), and that the lever device (4) is mounted and guided in such manner that it cannot lift up from the housing.

2. A rotary device as claimed in Claim 1, characterised in that the rotary retention device (24) comprises a screw (19) which engages rotatably into a threaded bore at the free end of the lever device (4).

3. A rotary device as claimed in at least one of the preceding claims, characterised in that an operating shaft (18) is formed onto the free end of the flexible sleeve (8) so as to form an integral material connection therewith, where said operating shaft (18) is rotatably mounted on the free end of the lever device (4).

4. A rotary device as claimed in at least one of the preceding claims, characterised in that the flexible sleeve (8) contains a metal hose (21) or a metal bellows (17).

5. A rotary device as claimed in at least one of the preceding claims, characterised In that the flexible sleeve (8) is surrounded by a grip sleeve (25) which is guided so as to be rotatable in relation to the flexible sleeve and which accommodates actuating forces and provides protection against outer influences.

6. A rotary device as claimed in at least one of the preceding claims, characterised in that the space between the lever device (4) and the flexible sleeve (8) is connected to the interior of the housing (1).

7. A rotary device as claimed in at least one of the preceding claims, characterised in that the lever device (4) comprises a curved tubular component, the tube interior of which is connected to the interior of the housing (1).

8. A rotary device as claimed in at least one of the preceding claims, characterised in that the housing (1) forms part of a shut-off device wherein a sealing surface in the form of a surface of a rotary body is provided, said sealing surface being rotatable by means of the lever device (4).

9. A rotary device as claimed in one of the preceding claims, characterised in that the lever device (4) is guided solely by the rotating unit (5).

10. A rotary device as claimed in at least one of the preceding claims, characterised in that the gas-tight housing (1) is part of a sorption apparatus which is filled with the sorbent zeolite.

## Revendications

1. Dispositif rotatif avec une traversée rotative sans fuite pour la transmission d'un mouvement de rotation à une unité rotative (5) à l'intérieur d'un boîtier (1), comportant un dispositif à levier (4) qui est raccordé selon une liaison de force à l'unité rotative (5) et est entouré par une enveloppe (8) au moins partiellement flexible, utilisée comme garniture d'étanchéité, et dans lequel une extrémité (3) du dispositif à levier (4) est raccordée à l'unité rotative (5), l'autre extrémité du dispositif à levier (4) est inclinée par rapport à la direction de l'axe de rotation, et le dispositif rotatif comporte des éléments de retenue, qui, dans le cas d'une surpression interne, empêchent un écartement de l'enveloppe (8) par rapport au dispositif à levier (4) ainsi qu'un écartement du dispositif à levier (4) lui-même, caractérisé par le fait que l'élément de retenue, qui empêche l'écartement de l'enveloppe (8), est réalisé sous la forme d'un élément de retenue rotatif (19,24), qui, d'une part, est raccordé de façon étanche à l'enveloppe (8), et, d'autre part, est maintenu de façon à pouvoir tourner sur l'extrémité libre du dispositif à levier (4), et que le dispositif à levier (4) est tourillonné et guidé de telle sorte qu'il ne peut pas s'écarter du boîtier.

2. Dispositif rotatif suivant la revendication 1, caractérisé par le fait que l'élément de retenue rotatif (24) est constitué par une vis (19), qui coagit, avec possibilité de rotation, dans un trou taraudé ménagé dans l'extrémité libre du dispositif à levier (4).

3. Dispositif rotatif suivant au moins l'une des revendications précédentes, caractérisé par le fait que sur l'extrémité libre de l'enveloppe flexible (8) est formé, selon une liaison par matériaux compatibles, un arbre d'actionnement (18), qui est monté rotatif sur l'extrémité libre du dispositif à levier (4).

4. Dispositif rotatif suivant au moins l'une des revendications précédentes, caractérisé en ce que l'enveloppe flexible (8) contient un tuyau métallique (21) ou un soufflet métallique (17).

5. Dispositif rotatif suivant au moins l'une des revendications précédentes, caractérisé par le fait que l'enveloppe flexible (8) est entourée par une enveloppe de préhension (25), qui est guidée de manière à pouvoir tourner par rapport à l'enveloppe flexible (8), reçoit les forces d'actionnement et réalise une protection vis-à-vis d'actions extérieures.

6. Dispositif rotatif suivant au moins l'une des revendications précédentes, caractérisé par le fait que l'espace intercalaire présent entre le dispositif à levier (4) et l'enveloppe flexible (8) est raccordé à l'espace intérieur du boîtier (1).

7. Dispositif rotatif suivant au moins l'une des revendications précédentes, caractérisé par le fait que le dispositif à levier (4) comporte un élément tubulaire coudé, dont l'espace intérieur communique avec l'espace intérieur du boîtier (1).

8. Dispositif rotatif suivant au moins l'une des revendications précédentes, caractérisé par le fait que le boîtier (1) fait partie d'une unité d'obturation, dans laquelle est présente une surface d'étanchéité, qui est agencée sous la forme d'une surface de corps rotatif et peut être entraînée en rotation au moyen du dispositif à levier (4).

9. Dispositif rotatif suivant l'une des revendications précédentes, caractérisé par le fait que le guidage du dispositif à levier (4) est réalisé uniquement par l'unité rotative (5).

10. Dispositif rotatif suivant au moins l'une des revendications précédentes, caractérisé par le fait que le boîtier (1) étanche aux gaz fait partie d'un dispositif de sorption, qui est rempli par le milieu de sorption formé par de la zéolithe.
